# EUROPEAN PATENT APPLICATION

(11) **EP 2 319 296 A1**
(43) Date of publication of application: **11.05.2011**
(21) Application number: 10188826.1
(22) Date of filing: 26.10.2010
(51) Int. Cl.: A01G 9/08, A01G 9/10

(54) **Processing system for plant holders**

(30) Priority: 27.10.2009 NL 2003715
(71) Applicant: Visser 's-Gravendeel Holding B.V., 3295 KH 's-Gravendeel (NL)
(72) Inventor: Visser, Cornelis Frans Taco, 3295 AE, 's-Gravendeel (NL)
(74) Representative: Grootscholten, Johannes A.M.

(57) **Abstract**

The present invention relates to a system for processing plant holders with at least one plant therein, such as trays and/or pots, which can be arranged on a carrying surface associated with the system. The system comprises at least one processing station on or in the carrying surface and transport means for transporting at least one plant holder at a time from and to the processing station. The transport means comprise at least one guide arranged at a height above a ground surface, a carriage which is displaceable relative to the guide, and at least one gripper for raising and/or lowering on the carriage for selectively picking up from above or setting down the plant holder from or onto the carrying surface, or in or at a processing station. The present invention also relates to a method for processing plant holders with at least one plant therein, such as trays and/or pots.

## Description

The present invention relates to a method and a system for processing plant holders with at least one plant therein, such as trays and/or pots, which can be arranged on a carrying surface associated with the system, the system comprising: at least one processing station on or in the carrying surface; and transport means for transporting at least one plant holder at a time from and to the processing station.

It is generally known that such systems are made up of conveyors, such as conveyor belts, wherein the plant holders are carried through the system on the conveyors in one movement. The conveyors extend here in or over the carrying surface to and from the processing stations. Conveyor belts, roller conveyors and other embodiments of known conveyors carrying the plant holders thereon have various drawbacks.

A conveyor is thus prone to malfunction. Particularly if water and/or substrate (mineral wool or soil etc.) enter moving parts of such conveyors malfunction may occur, or expensive measures must be taken to prevent such malfunction.

Nor are conveyors carrying plant holders very flexible. If a path between a source and a destination is selected for a plant holder, the plant holder must be picked up and placed on the conveyor using complex pick-up mean so as to then displace the plant holder to its destination, sometimes even while co-displacing or repositioning the whole conveyor, as is evidently the case in systems according to the disclosures according to NL-94.02.104 and NL-88.03.104. When a whole conveyor must be displaced in order to carry plant holders present thereon to a destination, complex and drastic steps are usually necessary in order to realize this.

According to the present invention problems of known systems are resolved in surprisingly simple manner with a device and a method according to independent claims 1 and 15. By approaching the transport of plant holders from a wholly different perspective, i.e. from above, it is made possible in astonishingly simple manner to obviate or at least considerably alleviate the problems of the known systems.

According to the invention it is possible to suffice with transport means of extremely simple and light form, for instance in the form of a suspended system with a gripper which is displaceable in an X-Y coordinate system and which can descend and be raised at a desired location in order to pick up or set down at least one plant holder. It is thus found that this wholly new and inventive approach to the transport of plant holders in such a system results in a considerable simplification, and it is possible to suffice with light components and parts without contamination and other ambient influences resulting in undesired malfunction in the system despite the use of the light parts and components which would per se be found to be prone to such malfunction under conditions other than those according to the invention.

The present invention has diverse preferred embodiments, to which the invention is not limited and the measures of which are defined in the dependent claims.

In an embodiment a system according to the invention thus has the feature of a control which is connected to at least one of the drive and the gripper for selectively setting into operation thereof. Plant holders can thus be displaced as desired in the carrying surface and/or from and/or to a processing station. The control here drives the carriage for displacement to a - preferably pre-known - position of a plant holder and there sets the gripper into operation in order to descend and pick up the relevant plant holder, or vice versa.

In an embodiment a system has the feature of location-determining means for recording a momentarily reached position of the gripper relative to a reference, such as a plant holder to be picked up, a position for setting down a plant holder, a position along the guide and/or a position relative to the processing station. The location-determining means can preferably be connected to the control. In addition or as alternative, the location-determining means can comprise at least one laser. In such embodiments the position of the carriage, or more particularly of the gripper, relative to in any case the carrying surface and/or the processing station can be determined precisely, without obstruction by dirt or other disruptive influences as may occur at the level of the carrying surface. Even the use of a relatively simple laser is thus made possible, this therefore being a preferred embodiment. In addition, signals coming from such location-determining means can be readily used by a control to control the carriage and/or the gripper.

In an embodiment a system according to the invention can have the feature of a beam which is displaceable along the guide and has a beam drive to be actuated selectively for selective displacement of the beam along the guide, and wherein the carriage drive is adapted to displace the carriage along the beam in a direction substantially transversely of the guide. Owing to the mutual co-action of the guide and the beam, in combination with the displaceability of the carriage along the beam, a conveyor is thus provided which can function within limits which must be related to the carrying surface, but the dimensions of which are in principle without limitations.

In another preferred embodiment a system according to the invention can have the feature that the carrying surface can be subdivided into at least two fields, each of which are related to at least one plant property of a plant in a plant holder disposed or to be disposed in the field. Groups of plant holders can thus be disposed in the carrying surface on the basis of for instance corresponding plant properties such as weight, leaf colour, growth and/or other properties. If provided, the control can provide for such a grouping of the plant holders.

In a further preferred embodiment a system according to the invention is such that the processing station comprises measuring means for determining a plant property from the group at least comprising: growth, development, weight, leaf colour, etc. It is thus made possible for the control to form groupings of plant holders on the basis of measurement results obtained in or at the processing station.

In a further preferred embodiment a system according to the invention is such that the measuring means comprise an image processing device for recording and processing at least one image of a plant in a plant holder in order to visually determine the plant properties. Growth, colour and such plant properties can be readily detected or recorded with imaging means, and the control can be set into operation on the basis of the results for the purpose of grouping and/or other displacement of the plant holder(s).

In an embodiment of a system with a control, wherein the carrying surface is also subdivided into fields, and with measuring or even imaging means, a system according to the invention can have the further feature that the control designates a plant holder for placing in a relevant one of the fields for plant holders with plants having at least one corresponding plant property using the transport means. As a result an overall system can be provided according to the invention which can function substantially autonomously, as a result of which influences can be mitigated which could adversely affect the normal or desired development of plants, which could even be associated with the presence of people.

In another preferred embodiment a system according to the invention has the further feature of watering means for watering a plant holder. The watering means can preferably be arranged in or at a processing station. Measurements in or at a processing station are thus possible, wherein the influence of watering can be immediately taken into account. This may for instance be important for the purpose of mapping the water-absorbing capacity of plant roots.

In yet another preferred embodiment a system according to the invention can have the feature that the gripper comprises a pivot block and at least two drivable arms reaching downward from and on the pivot block, which arms have a length at least corresponding to the height of plants in the plant holders. This results in a gripper with two, three or more arms which can be realized in very simple manner and still be very robust, particularly in respect of the alleviation of the task of transport means which is realized according to the invention.

In a preferred embodiment according to the invention a system can have the further feature that the gripper comprises an inserting fork for engaging particularly at least one tray. This is then a simple alternative enabling manipulation of a number of associated plant containers in a tray which can each comprise a plant, and wherein the fork can serve to act on the connections between the containers in the tray or immediately thereunder instead of at the connections.

In a preferred embodiment a system according to the present invention can be designed such that two or more grippers are provided, which can be set into operation autonomously and individually, or in combination with each other. The grippers can thus feed and discharge plant holders individually or be controlled to realize this in combination and co-action.

In yet another preferred embodiment a system according to the invention is such that at least one imaging device is provided in addition to or as an alternative to the at least one gripper. With such an embodiment it is also possible to approach a plant holder with a plant at a specific position with the imaging device, optionally in combination with the at least one gripper, so as to already enable in situ observation of the development of a relevant plant. It is thus possible to avoid pick-up and displacing of plant holders when this is found to be unnecessary, and a reduction can thus be made in the number of movements of the system, and the efficiency of the system can thereby be enhanced. In addition to or as alternative to the at least one gripper, a watering device could likewise be provided to move from and to the plants from above.

A not inconsiderable number of aspects of a system according to the invention has thus already been considered generally in the foregoing on the basis of the independent claim and the dependent claims. Also following below is a detailed description of a specific embodiment of a system according to the invention, which is disclosed only by way of example and which must not be deemed as limitative for the scope of protection according to the appended claims, with reference to the drawings in which (parts of) systems according to the invention can be designated with the same reference numerals in the various views of the embodiments, and in which:
Fig. 1 shows a schematic and perspective view of a system according to the present invention;
Fig. 2 shows a schematic and perspective view of a possible embodiment of a part of a system according to the present invention, as designated II in figure 1 by way of example; and
Fig. 3 shows a schematic side view of a possible embodiment of a part of a system according to the present invention, as designated III in figure 1 by way of example.

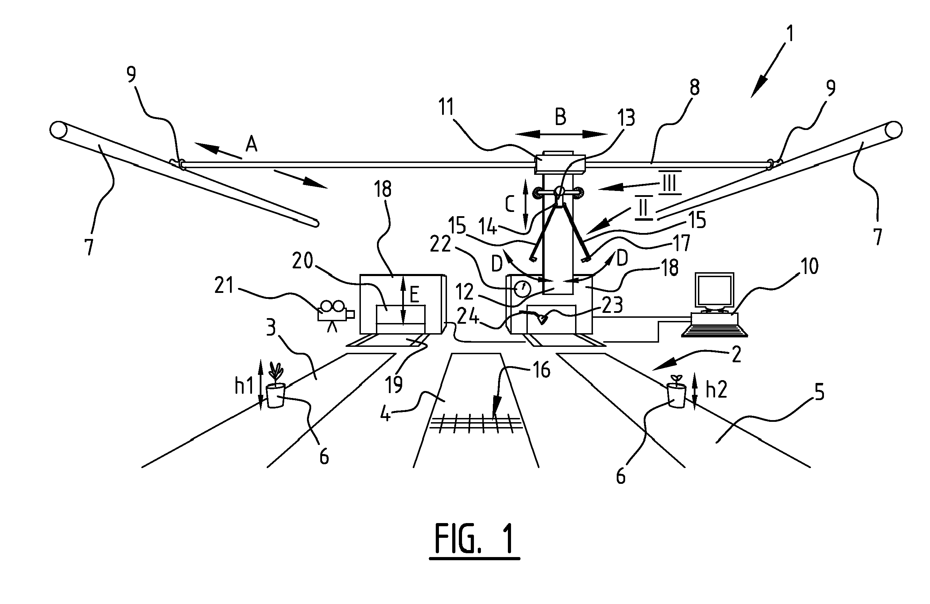

Fig. 1 shows a schematic and perspective view of a system 1 according to the present invention. System 1 spans a floor surface which forms a carrying surface 2 in the sense of the present invention. Carrying surface 2 is subdivided into fields 3, 4 and 5, each intended for arranging there - in each of the fields 3, 4 and 5 - plants in a plant holder, such as a pot 6, where it has been determined that the relevant plants in pots 6 have corresponding properties. These properties can relate to the weight, the degree of growth and the colour, concerning which further information will be provided below.

System 1 comprises a set of guides 7 over which can be displaced a beam 8 per se oriented transversely of guides 7. Beam 8 is for this purpose provided with running wheels 9. Beam 8 can thus be displaced by means of running wheels 9 over guides 7 in the direction of double arrow A. Provided for this purpose are advancing means (not shown) on which a control 10 acts for a desired displacement of beam 8 over guides 7. Where no mention is made below of a control or drive in relation to movements, such as are indicated for instance with arrows in fig. 1, it can be assumed that such movements are controlled by the same or an additional control 10.

A carriage 11, which is shown schematically, is displaceable along beam 8 in the direction of double arrow B, for which purpose advancing means (not shown) are provided which can be controlled per se using control 10 or another control, which in any case is then associated with control 10. The carriage 11 displaceable along beam 8 carries a guide plate 12 on which a gripper 13 is movable up and downward in the direction of double arrow C. Gripper 13 comprises a pivot block 14 with arms 15 thereon, wherein arms 15 are associated with moving means (not shown) to enable movement thereof toward or away from each other in the direction of double arrows D activated by control 10 or a control 10 other than the one shown, which in any case is then in communication with the shown control 10.

The operation of the present system 1 according to the present invention can be as follows:
In the middle one of fields 4 plant holders can be arranged at well-defined plant holder positions 16 on the ground or carrying surface 2. The plant holders can contain plants, specific properties of which may have to be determined. System 1 can be adapted for this purpose such that beam 8 is displaced over guides 7 in the direction of double arrow A and carriage 11 is displaced over beam 8 in the direction of double arrow B in order to position gripper 13 exactly above one of the plant holder positions 16 in the middle field 4 on carrying surface 2. Gripper 13 can then be moved downward in the direction of double arrow C until contact members 17 on the free outer ends of arms 15 have descended sufficiently to be able to engage a plant holder, in particular a pot 6. Arms 15 are subsequently moved toward each other in the direction of double arrows D in order to engage a pot 6 at one of the plant positions 16. Gripper 13 can then be moved upward again along guide plate 12 in order to carry the picked-up pot 6 to one of the processing stations 18, two of which are disposed, in the view of the embodiment according to fig. 1, on the edge of carrying surface 2 in which fields 3, 4 and 5 are defined.

Once a pot 6 with a plant therein has arrived at one of the processing stations 18, pot 6 can be placed on an infeed platform 19, wherein a door 20 as closure or opening of processing station 18 can be opened in the direction of double arrow E. With door 20 in an opened position the pot 6 can be fed into the processing station for the purpose of performing measurements thereon, more particularly on the plant in pot 6. A camera 21 can for instance be arranged in a processing station 18 or close by as part of imaging means for recording images of particularly the plant in the relevant pot 6. The colour of the plant can be recorded here, as well as the height or other properties thereof. By subjecting the plants in pots 6 to this treatment at regular intervals an image can be formed of the growing development of each relevant plant in a pot 6. On the basis of preselected criteria a pot 6 with a plant therein, after recording of these properties and classifying of the relevant plant, can be placed in one of the other fields 3, 5 together with a number of plants with corresponding properties. A grouping can thus be made in order to classify large numbers or selected numbers of plants in pots 6 or other plant holders and to collect them at exactly predefined locations in fields 3, 4 and 5.

The other of the processing stations 18 comprises weighing means. Subdivisions of groups of plants in pots 6 can also be realized on the basis hereof for the purpose of disposing them together, on the basis of corresponding properties, in fields 3, 4 and 5 distributed over carrying surface 2.

At processing station 18 without camera 21 a hand 22 indicates that the weight of a plant is measured here in one of the pots 6. A conduit 24 debouching in a spray nozzle 23 is also provided at this processing station. Watering means can thus also be realized in order to administer moisture and/or nutrients, plant protection products etc. to a plant in one of the pots 6.

It is further noted here that height h1, h2 of a plant in a relevant pot can also be measured, for instance in processing station 18 with camera 21. Classification and subdivision of the plants can therefore also take place on the basis of the height to which the relevant plants in pots 6 have grown at any moment. The development of the plants can thus be recorded in terms of the height reached so as to then enable plants with a similar development to be positioned together in fields 3, 4 and 5 in carrying surface 2, or more precisely in a random yet well-defined of the plant holder positions 16 in these fields.

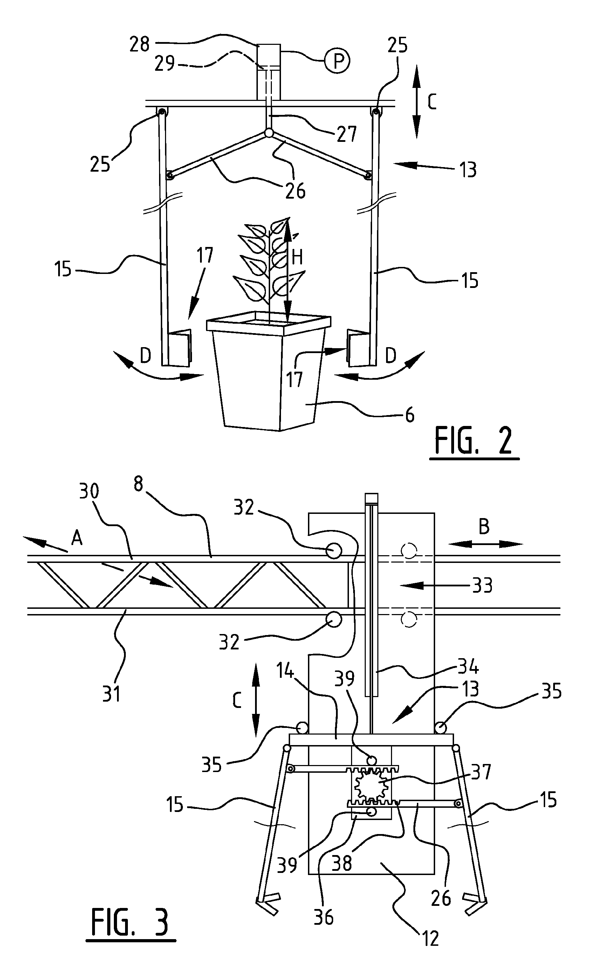

Fig. 2 shows a gripper 13 according to the present invention in more detail. Gripper 13 is situated in a downward moved position as according to the direction of double arrow C. The gripper is lowered to the level at which arms 15 can pivot toward each other about hinges 25 to enable a pot 6 to be gripped with contact members 17. In the embodiment shown here contact members 17 are angular, where in the embodiment of fig. 1 they take a more arcuate form.

Pull rods 26 connected pivotally to arms 15 are provided, by way of example, in order to cause pivoting of arms 15 about hinges 25. On the sides opposite arms 15 the pull rods 26 are coupled to piston rod 27, which extends in a cylinder housing 28 and is there connected to a piston 29. By selectively activating and deactivating a pump P the piston rod 27 can be moved up and downward and thereby act on arms 15 via pull rods 26 in order to move the arms away from or toward each other in the direction of double arrows D. It is noted that this is only one possible embodiment.

Fig. 3 thus shows in more detail the manner in which beam 8 is designed. Beam 8 is a truss with an upper beam 30 and a lower beam 31. Running wheels 32 are provided on the upper beam and below the lower beam in or on a part 33 of guide plate 12, which part 33 can therefore be designated as carriage 11 in the sense of the present invention. A long cylinder 34 is arranged in up or downward direction along guide plate 12 for the purpose of up and downward movement of gripper 13 in an embodiment other than that of fig. 2. Gripper 13 here also comprises a pivot block 14 which is movable up and downward on running wheels 25 on the side of guide plate 12 under the operation of cylinder 34, which for this purpose can in turn be connected to a pump (not shown) which can be selectively activated. A casing 36 having therein a motor, i.e. an electric motor, a hydraulic motor or pneumatic motor, for driving a toothed wheel 37 can be arranged under pivot block 14. Pull rods 16 are provided in this embodiment with a gear rack 38 which can be pressed against toothed wheel 37 by means of pressure rollers 39. By setting into operation the motor (not shown) in cabinet 36 the pull rods 26 can act on arms 15 so as to move them away from or toward each other.

After examination of the foregoing disclosure of a possible embodiment of a system according to the present invention many alternative and additional options, embodiments and concepts will occur to the skilled person, all lying within the scope of protection for the present invention as defined in the appended claims, in particular the independent claims. A system is then not an embodiment of the present embodiment of the present invention only when it does not have, in accordance with the letter or spirit, all the features of at least the independent claims. There are many other possibilities for realizing the diverse drives and controls than those explicitly shown and described here. For maintenance and malfunction it is also possible to allow control 10 to be in contact via for instance a VPN with the supplier of the system, or to otherwise send error messages to a remote location via for instance GSM and using an SMS. The shown drawings are expressly not intended to convey any impression in respect of proportions or dimensions, other than that arms 15 are preferably long enough to be able to pick up a pot 6 without causing damage to a plant growing therein. For many applications a length of the arms of for instance 60 centimetres will suffice, although this will not be the case for all applications. It is for this reason that not a single dimension or proportion, to the extent this can be inferred from the drawings, must be interpreted as limitative for the present invention. More than one gripper can be provided in the system and, additionally or alternatively to the gripper, an imaging device such as a camera can be provided.

## Claims

1. System for processing plant holders with at least one plant therein, such as trays and/or pots, which can be arranged on a carrying surface associated with the system, the system comprising: at least one processing station on or in the carrying surface; and transport means for transporting at least one plant holder at a time from and to the processing station, the transport means comprising:
- at least one guide arranged at a height above a ground surface;
- a carriage which is displaceable relative to the guide; and
- at least one gripper for raising and/or lowering on the carriage for selectively picking up from above or setting down the plant holder from or onto the carrying surface or in or at the processing station.

2. System as claimed in claim 1, further comprising a control connected to at least one of the gripper, the processing station, the carriage etc. for selectively setting into operation thereof.

3. System as claimed in claim 1 or 2, further comprising location-determining means for recording a momentarily reached position of the gripper relative to a reference, such as a plant holder to be picked up, a position for setting down a plant holder, a position along the guide and/or a position relative to the processing station.

4. System as claimed in claims 2 and 3, wherein the location-determining means are connected to the control.

5. System as claimed in claim 3 or 4, wherein the location-determining means comprise at least one laser.

6. System as claimed in at least one of the foregoing claims, further comprising a beam which is displaceable along the guide and has a beam drive to be actuated selectively for selective displacement of the beam along the guide, and wherein the carriage drive is adapted to displace the carriage along the beam in a direction substantially transversely of the guide.

7. System as claimed in at least one of the foregoing claims, wherein the carrying surface can be subdivided into at least two fields, each of which are related to at least one plant property of a plant in a plant holder disposed or to be disposed in the relevant one of the fields.

8. System as claimed in at least one of the foregoing claims, wherein the processing station comprises measuring means for determining a plant property from the group at least comprising:
growth, development, weight, leaf colour, etc.

9. System as claimed in claim 8, wherein the measuring means comprise an image processing device for recording and processing at least one image of a plant in a plant holder in order to visually determine the plant properties.

10. System as claimed in claims 2 and 7 and at least one of the claims 8 and 9, wherein the control designates a plant holder for placing in a relevant one of the fields for plant holders with plants having at least one corresponding plant property using the transport means.

11. System as claimed in at least one of the foregoing claims, further comprising watering means for watering a plant holder.

12. System as claimed in claim 11, wherein the watering means are arranged in or at a processing station.

13. System as claimed in at least one of the foregoing claims, wherein the gripper comprises a pivot block and at least two drivable arms reaching downward from and on the pivot block, which arms have a length at least corresponding to the height of plants in the plant holders.

14. System as claimed in at least one of the foregoing claims 1-12, wherein the gripper comprises an inserting fork for engaging particularly at least one tray.

15. System as claimed in at least one of the foregoing claims, wherein two or more grippers are provided, which can be set into operation autonomously and individually, or in combination with each other.

16. System as claimed in at least one of the foregoing claims, wherein at least one imaging device is provided in addition to or as an alternative to the at least one gripper.

17. Method for processing plant holders with at least one plant therein, such as trays and/or pots, comprising of:
- disposing and/or removing the plant holders respectively on and from a carrying surface associated with the system;
- transporting the plant holders from and to at least one processing station on or in the carrying surface using transport means for transporting at least one plant holder at a time; wherein disposing and/or removing the plant holders comprises of: picking up the plant holders from above over plants in the plant holders.
